# EUROPEAN PATENT APPLICATION

(11) **EP 2 805 610 A1**
(43) Date of publication of application: **26.11.2014**
(21) Application number: 13168664.4
(22) Date of filing: 22.05.2013
(51) Int. Cl.: A01K 5/00

(54) **A feeder for animals**

(71) Applicant: SlowFeeding DNAS AB, 574 95 Björköby (SE)
(72) Inventor: Lind, Good Ove, SE-574 95 BJÖRKÖBY (SE)
(74) Representative: Somlo, Tommy

(57) **Abstract**

The present invention relates to a feeder (1) for animals. The feeder comprises: a base portion (20) for holding hay and a meshed net (10) for covering hay held in the base portion. The meshed net has a plurality of meshes (12) through which an animal may remove hay. The base portion comprises: at least a first, a second and a third corner (22) being interconnected by at least a first, a second and a third upper interconnecting portion (24), wherein at least two of the corners forms an angle of less than 90°; and at least a first shielding side (26) extending down/away from the first upper interconnecting portion. The first shielding side is impenetrable to hay.

## Description

### Technical field of the Invention

The invention relates to a feeder for animals, such feeder may e.g. be a hay net or a hay bag, and may be used in e.g. stables, animals transporters, horse boxes and/or paddocks.

### Background of the Invention

Some animals, such as e.g. horses, have a congenital need to continuously feed. Therefore, a horse's digestive system is adapted to more or less continuously digest food. If the horse has access to food for only parts of the day, as could be the case e.g. when the horse is in a stable or in a horse transport, the horse's digestive system will not function properly. Moreover, the parts of the day when the horse is fed, the horse tends to eat more than it should. Such feeding patterns may result in that the horse gets gastric ulcer and/or other stomach problems.

In view of the above problems, feeders for animals as e.g. horses, have been constructed where the horse is only allowed to eat a little food at a time, but where the horse has a continuous access to the feeder.

Such a feeder may e.g. be a hay net, where the meshes of the net are made small enough for the horse to withdraw only a small amount of hay at a time.

A problem with currently available hay nets is that the horse runs the risk of getting its hooves stuck in the meshes of the net. This problem exists not only when the hay net lies on the ground, but also when the hay net is hanging from a vertical structure, such as a wall or a fence.

### Summary of the Invention

An object of the present invention is to alleviate the drawbacks of the prior art. This and other objects, which will become apparent in the following description, are accomplished by a feeder as defined in the accompanying claims.

The present invention is based on the realization that by controlling the direction in which the horse approaches the feeder and by providing the feeder with a portion which is impenetrable to hay and which will face the legs of the horse, the risk of the hooves getting stuck will be reduced. In particular, by hanging the feeder in a corner (e.g. inside a stable) with an impenetrable portion of the feeder facing away from the corner, the risk of the horse getting stuck with its hooves becomes much reduced, since the different directions from which the horse may approach the feeder is limited.

According to at least one aspect of the present invention, a feeder for animals is provided. The feeder comprises:
a base portion for holding hay;
a meshed net for covering hay held in said base portion, said meshed net having a plurality of meshes through which an animal may remove hay;
said base portion comprising:
   at least a first, a second and a third corner being interconnected by at least a first, a second and a third upper interconnecting portion, wherein at least two of said corners form an angle of less than 90°; and
   at least a first shielding side extending down/away from said first upper interconnecting portion;
      wherein the first shielding side is impenetrable to hay.

The feeder may suitably be hung in a corner of a stable, cornered fence or the like, wherein one of the three corners of the base portion is facing the stable/fence corner and the first shielding side is facing away from the stable/fence corner and towards the legs of the horse. The shielding side not only reduces the risk of the horse becoming stuck with its hooves, but also, due the side being impenetrable to hay, directs the interest of the horse to other portions of the feeder.

Another advantage of the present invention, is that the shielding portion can be made stronger than a conventional meshed net, thus prolonging the durability of the feeder. A further advantage is that due to the lower location of the shielding portion and the upper location of the meshed net, the horse will eat in a natural position. Indeed, a horse's digestive system tends to function less properly when the horse is fed from a standard vertically hanging net keeping its neck and head in an unnatural posture, compared to when the horse has fed from grazing. With the present invention, the horse will eat having its head substantially above the feeder similarly to when grazing.

According to at least one example embodiment, the at least first, second and third upper interconnecting portions form a substantially triangular cross section. Hence, the feeder may be placed in a corner of a stable, cornered fence or the like, in such a way that said second and said third upper interconnecting portion each extends, or substantially extends, along one of the walls forming the corner of a stable or one of the sides forming the corner in a fence, and the first upper interconnecting portion extends, or substantially extends, between the two walls forming the corner of the stable or the two sides forming the corner in the fence. Hereby, the placement of the feeder in a corner of a stable, cornered fence or the like, is facilitated.

According to at least one example embodiment, said base portion comprises at least a fourth corner and a fourth interconnecting portion, said fourth upper interconnecting portion is located opposite to said first upper interconnecting portion and is shorter than said first upper interconnecting portion. Owing to this, the at least first, second, third and fourth upper interconnecting portions may form a cross section formed as a trapezium, e.g. an isosceles trapezium. Hereby, the placement of the feeder in e.g. a horse transport where two side walls of the horse transport tapers towards a smaller front wall, is facilitated. The feeder may also be arranged in a corner as described above for a feeder with a substantially triangular cross section.

According to at least one example embodiment, the meshed net is attached to at least the second and the third upper interconnecting portions. The net may, for instance, be attached by attachment means, such as by one or more seams along said upper interconnecting portions. Alternatively, the meshed net may be provided as a separate portion which is tied to the second and third upper interconnecting portions.

There may be different ways to fill the base portion with hay. For instance there may be a closable opening in the actual meshed net, or there may be an accessible space between the meshed net and one of said upper interconnecting portions which is large enough to easily fill the base portion with hay. The filling may suitably be performed from the first upper interconnecting portion, which is reflected in at least one example embodiment. According to that embodiment, an opening, having a cross-sectional area through which said base portion may be filled with hay, is arranged between the meshed net and the first upper interconnecting portion.

According to at least one example embodiment, the feeder comprises closing means adapted to attach the meshed net to the first upper interconnecting portion in such a way that the cross-sectional area of the opening is reduced. Advantageously, before said reduction of the opening, the opening should be large enough to allow a person to conveniently fill the base portion with hay. Subsequently, when the base portion has been filled with hay and the closing means is used to reduce the cross-sectional area, it should be small so that the horse cannot remove hay through it too easily. Suitably, when the cross-sectional area of the opening has been reduced, it is not larger than the area of a mesh of the meshed net. The closing means may be embodied in different ways, for instance comprising, hook-and-loop fastening means, zip fastening arrangement, buttons, strings, etc. Furthermore, there may be a plurality of closing means spaced apart along the meshed net and/or the first upper interconnecting portion, whereby the opening will be reduced into a plurality of smaller openings when the closing means are applied. Although substantial material of the base portion could be located above the upper interconnecting portions, the upper interconnecting portions may suitably represent upper edge or end portions of the base portion.

According to at least one example embodiment, the closing means comprises two strings arranged to attach the meshed net to the first upper interconnecting portion in such a way that the cross-sectional area of the opening is reduced, wherein the two strings have different lengths. While unnecessary lengths of string should be avoided, having one of the strings longer facilitates the threading of the string through a mesh of the net before tying the two strings together. According to at least one example embodiment, the feeder comprises a plurality of string pairs arranged along the first upper interconnecting portion for tying the net to the first upper interconnecting portion. Suitably, in each such string pair, one of the strings may be longer than the other.

According to at least one example embodiment, the feeder comprises fastening means, such as e.g. a loop or a hook, for fastening the feeder to an external surface, such as e.g. a wall. Although this could be arranged at different locations of the meshed net and/or the base portion, at least one of the fastening means is arranged at one of said corners of the base portion

According to at least one example embodiment, the fastening means are arranged at each of the corners. This arrangement is convenient for hanging the feeder at a corner site, such as in a box, stable, etc.

According to at least one example embodiment, any one of the meshed net, the base portion and the first shielding side is made of a flexible material. The material may e.g. be polyester, polypropylene and/or ultra-high molecular weight polyethylene (UHMwPE) such as of the brand Dyneema®.

According to at least one example embodiment, the feeder comprises a reinforcement, such as a PVC-tube, arranged at least at the first upper interconnecting portion. The reinforcement makes the first upper interconnecting portion more robust and rigid than the other upper interconnecting portions. The first interconnected portion, due to the expected position of the horse, will be most likely be subjected to most of the load and/or strain from the horses head and mouth. The reinforcement may be tubular, such as a PVC tube, which around its circumference may be enclosed by the shielding fabric of the base portion. Inside and through the tubular reinforcement, a resilient rope may extend and end with fastening means at the corners between which the first upper interconnecting portion extends. Due to the resiliency, if the first upper interconnecting portion is temporarily displaced or deformed by the horse, it will afterwards return to its previous position and shape. Other alternative reinforcements are also conceivable, such as increased material thickness at the first upper interconnecting portion.

According to at least one example embodiment, said base portion further comprises a second shielding side extending away/down from the second upper interconnecting portion and/or a third shielding side extending away/down from the third upper interconnecting portion, wherein the second and the third shielding sides are impenetrable to hay. Thus, although it is conceivable, in some embodiments to have non-shielding sides (e.g. if those sides are intended to face a wall, advantageously, the entire base portion may be provided with a shielding fabric so as to even further reduce the risk of the horse getting stuck with its hooves.

According to at least one example embodiment, the first shielding side is triangularly formed. In other embodiments, the first shielding side has a rectangular shape. Other shapes are also conceivable.

According to at least one example embodiment, each of the first shielding portion, the second shielding portion and the third shielding portion is tapering towards a common vertex. Thus, the cross-sectional area of the base decreases towards the ground. This also reduces the risk of the horse getting stuck with its hooves.

According to at least one example embodiment, the first shielding side is seamlessly connected to the second and/or third shielding side. A conceivable alternative would be to have the first shielding side be connected to the second and/or third shielding side by means of one or more seems. This last alternative is reflected in at least one example embodiment, wherein the first, second and third shielding sides form the base portion such that each of the three sides is a side of a common tetrahedron.

Irrespectively of the connection to the first shielding side, according to at least one example embodiment, the second shielding side is connected to the third shielding side by means of a seem.

Although the meshed net may have various shapes, according to at least one example embodiment, it is substantially triangular.

According to at least one example embodiment, a majority of the meshes in the meshed net has a size of 1-6 cm, preferably 3-6 cm or 2-5 cm, and more preferably 3-5 cm. The size is measured as the length of a side of a square mesh as opposed to a diagonal of the mesh. However, other shapes and sizes are also conceivable.

According to at least one example embodiment, a geometrical plane extends through all of said upper interconnecting portions such that a first space may be defined by the meshed net and said geometrical plane, and a second space may be defined by the base portion and said geometrical plane. Hereby, the second space may provide for a volume in which the base portion may be filled with hay. According to at least one example embodiment, the second space may be completely filled with hay such that the entire volume, or substantially the entire volume, of the base portion is filled with hay. According to yet another example embodiment, the feeder may be filled with hay to such extend that at least a part of the first space is filled with hay. Hereby, the meshed net may bulge above said geometrical plane.

According to at least one example embodiment, said first space has a maximum volume which is at least as large as a maximum volume of said second space. Hereby, the horse may reach the hay at the bottom of the feeder, while the hay is still covered by the meshed net.

It should be understood that the word "hay" may refer to silage, ensilage, straw, halm and the like. It should be understood that the feeder may be filled with other animal food than hay, such as e.g. oats, carrots, etc.

### Brief description of the drawings

The present invention will now be described in more detail, with reference to the appended drawings showing example embodiments of the invention, wherein:
Fig. 1 is a perspective view illustrating a feeder according to at least one example embodiment of the invention;
Fig. 2 is a side view illustrating a feeder according to at least one example embodiment of the invention;
Fig. 3 is a different side view illustrating a horse eating from a feeder according to at least one example embodiment of the invention;
Fig. 4 is a perspective view illustrating a feeder in a folded position according to at least one example embodiment of the invention; and
Fig. 5 is a perspective view illustrating a feeder according to at least yet another example embodiment of the invention.

### Detailed description of the drawings

In the following description, the present invention is described.

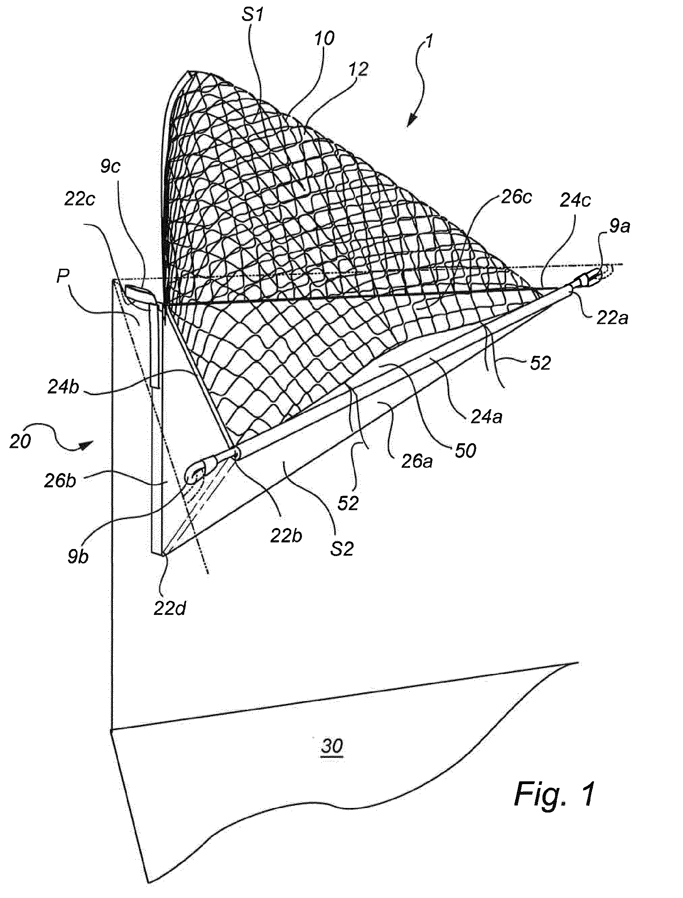

Fig. 1 is illustrating a feeder 1 for animals according to at least one example embodiment of the invention, where the feeder 1 is in the form of a hay net arrangement 1. The hay net arrangement 1 comprises a base portion 20 for holding hay, and a meshed net 10 covering the hay in the base portion 20. The meshed net 10 has a plurality of meshes 12 having a mesh size of e.g. 1-6 cm, preferably 3-6 cm or 2-5 cm, and more preferably 3-5 cm. The mesh size being the distance between two substantially parallel strings of one of the plurality of meshes 12.

The base portion 20 has three corners 22a, 22b, 22c being interconnected and forming a substantially triangular cross section. Corners 22a and 22b are interconnected by a first upper interconnecting portion 24a, corners 22b and 22c are interconnected by a second upper interconnecting portion 24b, and corners 22c and 22a are interconnected by a third upper interconnecting portion 24c. A first, a second and a third shielding side 26a, 26b, 26c extend down from each of the upper interconnecting portions 24a, 24b, 24c, respectively, such that the first shielding side 26a is extending down from the first upper interconnecting portion 24a, the second shielding side 26b is extending down from the second upper interconnecting portion 24b, and the third shielding side 26c is extending down from the third upper interconnecting portion 24c. It should be noted that the wording "extending down" is here referring to as away from the meshed net 10, alternatively, if the hay net arrangement 1 is hanging, towards a ground 30, e.g. a floor.

As illustrated in Fig. 1, a geometrical plane P extends through all of said upper interconnecting portions 24a, 24b, 24c such that a first space S1 is defined by the meshed net 10 and the geometrical plane P, and a second space S2 is defined by the base portion 20 and the geometrical plane P. The second space S2 may thus provide for a volume in which the base portion may be filled with hay. As shown in Fig. 1, the feeder 1 may be filled with hay to such extend that the entire second space S2, and at least a part of the first space S1 is filled with hay, i.e. the meshed net 10 bulges above the geometrical plane P. As also illustrated in Fig. 1, the first space S1 may have a maximum volume which is at least as large as a maximum volume of the second space S2. Hereby, the horse may reach hay at the bottom of the base portion 20, while the hay is still covered by the meshed net 10.

The hay net arrangement 1 further comprises fastening means 9a, 9b, 9c, here illustrated as loops, arranged at each corner 22a, 22b, 22c, respectively, for fastening the hay net arrangement 1 to e.g. walls in a corner of a stable, or to cornered poles of a fence. The substantially triangular cross sectional shape of the base portion 20 in Fig.1 is advantageous when the hay net 1 is to be arranged in a corner of a stable/horse box/paddock etc. Thus, fastening means 9a, 9b may be fastened to each of two perpendicular walls, while fastening means 9c may be fastened to the intersection of the walls.

As illustrated in Fig. 1, each of the first, second and third shielding side 26a, 26b, 26c is tapering down towards the ground 30, to a common vertex 22d. The first shielding side 26a is seamlessly connected to the second shielding side 26b and the third shielding side 26c. However, it should be noted that the first shielding side 26a may be connected to the second shielding side 26b and/or the third shielding side 26c e.g. by a seam. Furthermore, the second shielding side 26b and the third shielding side 26c may or may not be connected to each other e.g. with a seam.

The meshed net 10 in Fig.1 is attached to the second and third upper interconnecting portions 24b, 24c such that the meshed net 10 is covering any hay contained in the base portion 20. The attachment may comprise a welded seam or similar, but may as well be an attachment portion based on any other form of attachment means such as e.g. adhesive, stitching etc. Between the first upper interconnecting portion 24a and the meshed net 10 an opening 50 is arranged. The opening 50 has a cross-sectional area through which the volume in the base portion 20 may be filled with hay. The hay net arrangement 1 in Fig. 1 comprises closing means in the form of two pairs of strings 52, adapted to attach the meshed net to the first upper interconnecting portion in such a way that the cross-sectional area of the opening is reduced. It should be understood that additional pairs of strings may be provided to even further reduce the opening area.

As illustrated in Fig.1, the meshed net 10 will be bulged by the hay, but it should be noted that the base portion may be filled with hay such that the meshed net 10 is substantially extending along the triangular cross section between the upper interconnecting portions 24a, 24b, 24c.

It should be mentioned that the first upper interconnecting portion 24a may be reinforced by a revetment by e.g. a PVC-tube, in order to better withstand wear caused by the horse. This is shown in Fig. 1 as the first upper interconnecting portion 24a is slightly thicker compared to the second and third upper interconnecting portions 24b, 24c.

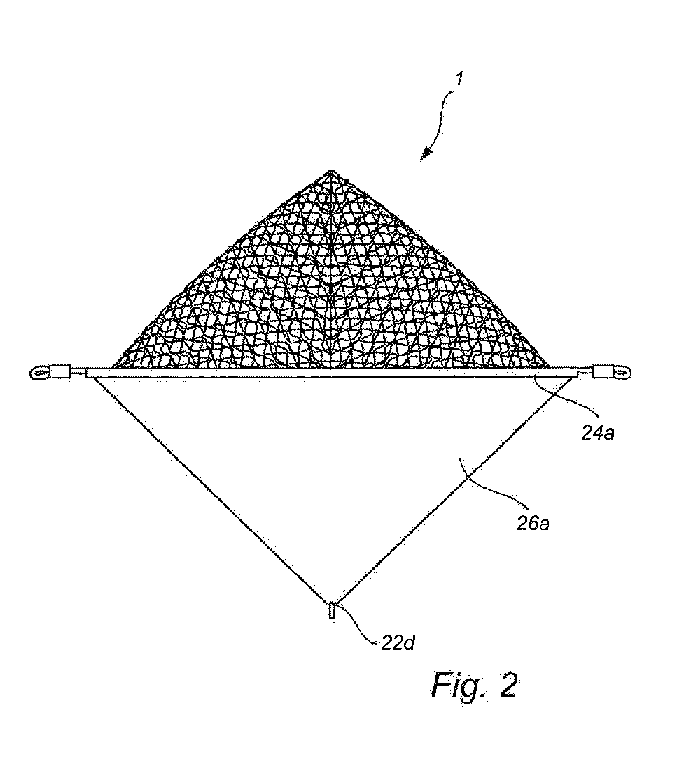

Fig. 2 illustrates the hay net 1 in Fig. 1 from a side view. Here, it is clear that the first shielding side 26a has a triangular form. Furthermore, in Fig. 2 the vertex 22d of which the first, second and third shielding portions 26a, 26b, 26c are tapering towards, is better visualized.

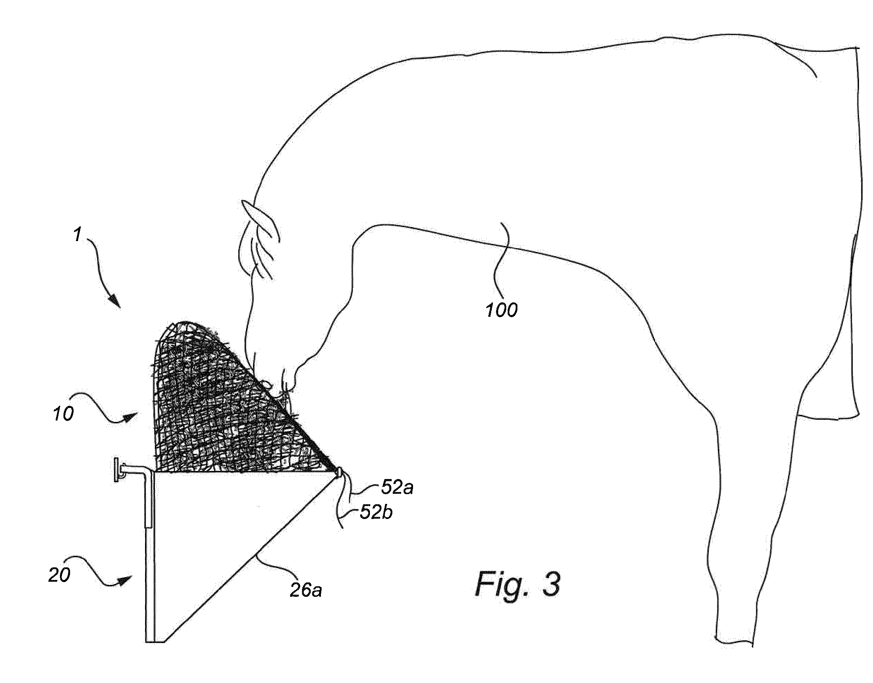

Fig. 3 illustrates a similar feeder 1, or hay net arrangement 1, as in Figs. 1 and 2. Here, the base portion is fully filled with hay. Moreover, opening 50 (shown in fig. 1) is substantially closed by the two pair of strings 52, such that the cross section area of the opening 50 between the first upper interconnecting portion 24a and the meshed net 10 is reduced compared to the opening in Fig. 1. Each of the pair of strings 52 comprise a first string 52a and a second string 52b, wherein each first string 52a is longer than each second string 52b. Hereby, the procedure to tie the strings 52a, 52b together is facilitated since each longer string 52a may be used to pull the strings 52a, 52b together. Moreover, by having one of the strings 52b made shorter, unnecessary length of the strings 52, which the horse may unintentionally get stuck to or chew, is avoided.

The function of the feeder 1 in Fig. 3 will now be described in use. The inventor realized that a horse 100 may be prevented from getting stuck with its hooves if the hay net arrangement 1 is provided with at least one shielding side 26a. The at least one shielding side 26a should be impenetrable to hay, and faced towards where the horse 100 is standing when eating from the hay net arrangement 1. Hereby, the horse 100 is forced/directed to withdraw hay from the pluralities of meshes 12 of the meshed net 10, facing away from the ground 30. In other words, the shielding side 26a together with the shape and form of the hay net 1 directs the horse to eat from a desired direction.

Another advantage of having a hay net arrangement 1 comprising at least one shielding side 26a is that if the hay net arrangement 1 is arranged on the floor, the shielding side 26a may be used to protect the hay from dirt on the floor, and also to prevent the hay to exit the hay net arrangement 1.

According to at least one example embodiment, the hay net arrangement 1 may be used in a horse transport.

According to at least one example embodiment, the feeder or hay net arrangement 1 may have a shape similar to that of a tetrahedron, where the base portion comprises three triangular faces corresponding to the first, second and third shielding side 26a, 26b, 26c respectively, which meet at a vertex facing downwards towards the ground upon hanging of the feeder 1.

According to at least one example, the meshed net 10 may be interchangeable, such that the meshed net 10 may be detached and removed from the base portion 20, e.g. if the meshed net 10 has been worn down. A new meshed net may then be attach to the base portion in a similar manner as the old meshed net 10. Hence, the attachment between the base portion 20 and the meshed net 10 may be made by some detachable attachment means, e.g. Velcro^{™}. The meshed net 10 may also be an external net, which may be filled with hay and then placed in the base portion 20. The meshed net 10 is then preferably attached to the base portion 20 by e.g. strings.

According to at least one example embodiment, the base portion 20 may be arranged with a hole in the bottom, i.e. close to the vertex 22d of the base portion 20, in order for allowing cleaning water to flow through the base portion 20 and thereby facilitating cleaning of the hay net 1

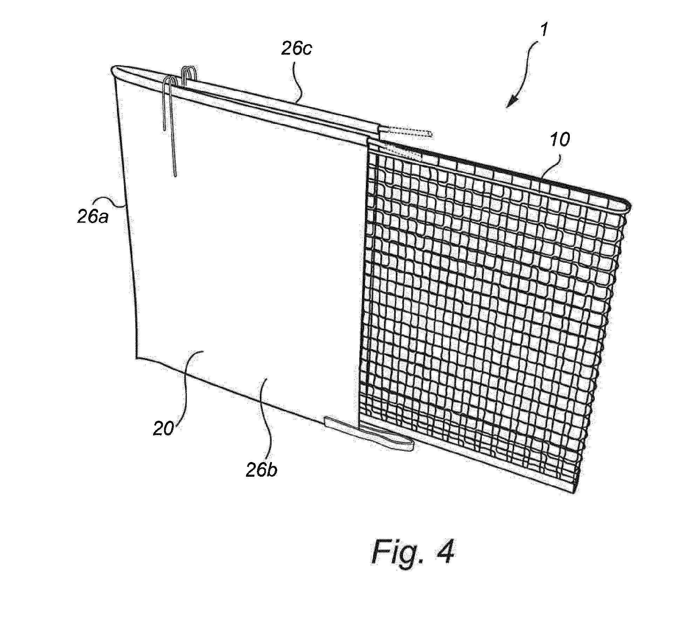

As illustrated in Fig. 4, the meshed net 10 and the base portion 20 may be constructed in such a way that it is easily foldable. In this embodiment, the first shielding side 26a is preferably seamlessly connected to the second shielding side 26b and the third shielding side 26c. Hereby, the feeder 1 may folded and easily transported.

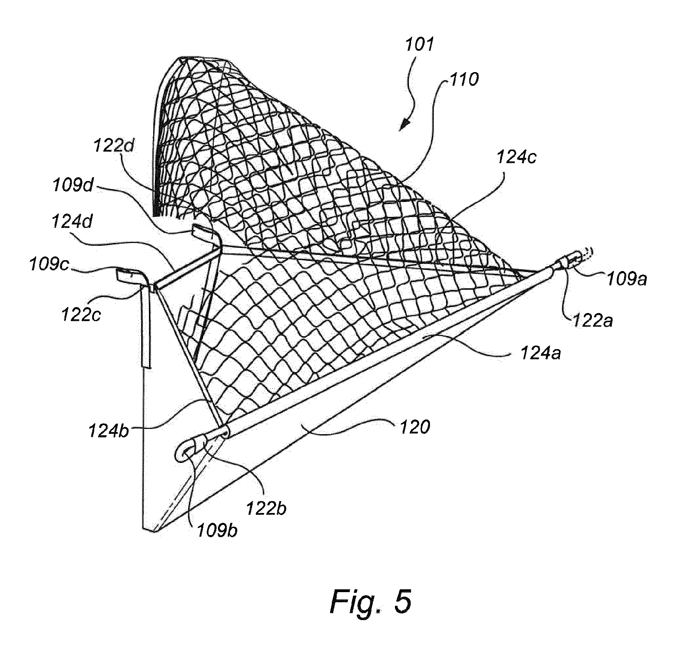

Fig. 5 illustrates an embodiment of the invention which is suitable for placement in e.g. a horse transport. The feeder 101 in Fig. 5 is similar to the feeder 1 in Figs. 1-4, e.g. and the base portion 120 is covered with a meshed net 110, but with the difference that in Fig. 5, the feeder 101 comprises a base portion 120 with four corners 122a, 122b, 122c, 122d being interconnected and forming a substantially four-corned cross section, e.g. a trapezium cross section. Corners 122a and 122b are interconnected by a first upper interconnecting portion 124a, corners 122b and 122c are interconnected by a second upper interconnecting portion 124b, corners 122a and 122d are interconnected by a third upper interconnecting portion 124c, and corners 122c and 122d are interconnected by a fourth upper interconnecting portion 124d. Furthermore, each corner is also provided with fastening means 109a, 109b, 109c, 109d for fastening the feeder 101 to e.g. walls. As illustrated in Fig.5, the fourth upper interconnecting portion 124d is located opposite to the first upper interconnecting portion 124a and the fourth upper interconnecting portion 124d is shorter than the first upper interconnecting portion 124a. Hereby, the feeder 101 may suitably be placed in a horse transport with tapering walls.

The person skilled in the art realizes that the present invention by no means is limited to the embodiments described above. For example, other shapes of the base portion and/or meshed net are applicable and more shielding portions and other fastening means may be used.

## Claims

1. A feeder for animals comprising:
a base portion for holding hay;
a meshed net for covering hay held in said base portion, said meshed net having a plurality of meshes through which an animal may remove hay;
said base portion comprising:
at least a first, a second and a third corner being interconnected by at least a first, a second and a third upper interconnecting portion, wherein at least two of said corners forms an angle of less than 90°; and
at least a first shielding side extending down/away from said first upper interconnecting portion;
wherein the first shielding side is impenetrable to hay.

2. A feeder for animals according to claim 1, wherein the at least first, second and third upper interconnecting portions form a substantially triangular cross section.

3. A feeder for animals according to claim 1, wherein said base portion comprises at least a fourth corner and a fourth upper interconnecting portion, said fourth upper interconnecting portion is located opposite to said first upper interconnecting portion and is shorter than said first upper interconnecting portion.

4. A feeder for animals according to any one of the preceding claims, wherein the meshed net is attached to at least the second and the third upper interconnecting portions.

5. A feeder for animals according to any one of the preceding claims, wherein an opening, having a cross-sectional area through which said base portion may be filled with hay, is arranged between the meshed net and the first upper interconnecting portion.

6. A feeder for animals according to claim 5, comprising closing means adapted to attach the meshed net to the first upper interconnecting portion in such a way that the cross-sectional area of the opening is reduced.

7. A feeder for animals according to any one of the preceding claims, comprising fastening means, such as e.g. a loop or a hook, for fastening the feeder to an external surface, such as e.g. a wall.

8. A feeder for animals according to claim 7, wherein the fastening means are arranged at each of the corners.

9. A feeder for animals according to any one of the preceding claims, comprising a reinforcement, such as a PVC-tube, arranged at least at the first upper interconnecting portion.

10. A feeder according to any one of the preceding claims, wherein said base portion further comprises a second shielding side extending away/down from the second upper interconnecting portion and/or a third shielding side extending away/down from the third upper interconnecting portion, wherein the second and the third shielding sides are impenetrable to hay.

11. A feeder for animals according to any one of the preceding claims, wherein the first shielding side is triangularly formed.

12. A feeder for animals according to any one of claims 10 or 11,
wherein each of the first shielding portion, the second shielding portion and the third shielding portion is tapering towards a common vertex.

13. A feeder for animals according to any one of claims 10 to 12,
wherein the first shielding side is seamlessly connected to the second and/or third shielding side.

14. A feeder for animals according to any one of claims 10 to 12,
wherein the first, second and third shielding sides form the base portion such that each of the three sides is a side of a common tetrahedron.

15. A feeder for animals according to any one of the preceding claims, wherein a geometrical plane extends through all of said upper interconnecting portions; wherein a first space is defined by the meshed net and said geometrical plane, and a second space is defined by the base portion and said geometrical plane, and wherein said first space has a maximum volume which is at least as large as a maximum volume of said second space.
